# EUROPEAN PATENT SPECIFICATION

(11) **EP 0 947 421 B1**
(45) Date of publication and mention of the grant of the patent: **21.04.2004**
(21) Application number: 98302159.3
(22) Date of filing: 30.03.1998
(51) Int. Cl.: B64C 7/00

(54) **Fairing arrangements for aircraft**
Stromlinienverkleidungen für Flugzeuge
Carénages pour avion

(43) Date of publication of application: 06.10.1999
(73) Proprietor: Airbus UK Limited, Bristol, BS99 7AR (GB)
(72) Inventor: Johnson, Brian D., Filton, Bristol, BS99 7AR (GB)
(74) Representative: Wojcik, Lucy Eleanor

(56) References cited:
- EP-A- 0 427 491
- DE-A- 2 216 710
- GB-A- 2 235 169
- GB-A- 2 238 026
- GB-A- 2 238 991

## Description

This invention relates to fairing arrangements for aircraft according to the preamble of claim 1, and in particular, although not exclusively, to seal arrangements for use with fairings associated with flying control surfaces, for example ailerons. The invention also extends to methods of producing flexible seal members for such fairing arrangements.

In a typical commercial aircraft such as the Airbus A330 or A340 each wing has an in-board and an out-board aileron and each aileron is actuated by means of two actuator jacks. The size of the actuator and the local geometry mean that the aileron actuator protrudes below the lower wing surface and so the lower surface of the wing and the associated surface of the actuator are formed to provide forward and rearward fairing portions respectively. The typical aileron movement required is +/- 30° and a flexible aileron actuator seal is provided between the fairing portions to accommodate at least a major part of this movement and to prevent the ingress of debris etc. Aerodynamic considerations require that the longitudinal axis of the aileron fairing be aligned with the direction of flight but the sweep of the wings means that the aileron hinge axis lies typically at 60° to the longitudinal axis of the fairing. This means that the seal not only has to cope with up to +/- 30° aileron movement but also with a translational movement generated because of the angular offset of the hinge axis.

There have been several earlier proposals to cope with the extreme demands placed on the seal and these have largely consisted of independently flexible fingers or flexible rods intended to cope with the compound movement.

For example in our British Published Patent Application GB 2 235 169A, we claim such an externally mounted fairing arrangement in which fairing portions respectively fixed to the aircraft fixed structure and the control surface are bridged by an intermediate flexible sealing portion comprising a labyrinth seal of two or more overlapping or interconnected sealing elements which can accommodate differential movement between the fixed fairing portions when the control surface is angularly displaced relative to the aircraft fixed structure, i.e. the wing.

An alternative sealing arrangement is disclosed in our British Published Application GB 2 238 991A, in which the intermediate flexible sealing portion comprises a single element sealing diaphragm which is deformable to accommodate the differential movement between the respective fairing portions. In the preferred arrangement, the diaphragm includes surface stabilising elements either stitched or moulded in-situ. These stabilising elements can be single flexible rods, for example of circular cross section or of some other suitable cross-section.

In our British Published Patent Application GB 2 238 026A we describe a fairing arrangement in which the seal arrangement comprises a flexible single element sealing diaphragm which includes grouped layers of flexible rods lying substantially parallel.

In our European Published Application EP 0 427 491A we describe an arrangement in which the flexible seal arrangement comprises two or more slidable overlapping staggered layers of longitudinally extending fingers.

In practice, we have found that although these above arrangements perform well they have a relatively short life. Thus, where the fingers are of metal, the requirement to provide some pre-stressing and an ability to accommodate up to +/- 30° movement means that the fingers are susceptible to metal fatigue. This can be exacerbated by the fact when the aircraft is idle, the ailerons droop to -30° and obviously can be left in this state for extended periods.

In addition to the potential problems due to metal fatigue, the finger-type seals are complicated and thus expensive to manufacture.

In this Specification, the terms forward, rearward, up, down, etc. are made with reference to an aircraft in straight and level flight. The terms inner and outer when applied to the seal member refer to the internal and exposed external surfaces when in use.

Accordingly, there is a requirement for a seal arrangement with a greater life expectancy and which is able to cope with most of the demands referred to above and which provides a generally smooth continuous surface in normal cruise flight to miminize drag.

Somewhat surprisingly, we have found that it is possible to make a composite rubber or rubber-like seal arrangement incorporating fabric reinforcement which is capable of meeting many if not all of the above demands. In particular, given the extreme angular movement required in combination with the translational movement, we have been able to design a seal which is capable of the substantial bending and stretching as required.

Accordingly, in one aspect of this invention there is provided a fairing arrangement for bridging an aircraft fixed structure and a control surface hingedly mounted on and angularly displaceable with respect to said aircraft structure, said fairing arrangement including:
a first fairing portion locatable on said fixed aircraft structure,
a second fairing portion locatable on said control surface, and
an intermediate flexible seal member disposed between said first and second fairing portions and having a proximal edge region fixed relative to one of said first and second fairing portions and a distal edge region,
wherein said flexible seal member comprises a composite sheet element of rubber or rubber-like material incorporating a plurality of reinforcing plies across at least part of said sheet element, at least one said ply extending across substantially the whole of the sheet element and each ply comprising one or more fabric elements, whereby the seal arrangement is deformable to accommodate differential movement between said first and second fairing portions when said control surface is angularly displaced with respect to the fixed aircraft structure and said seal arrangement defines a surface which generally conforms to the adjacent portions of said first and second fairing portions throughout at least a major extent of the range of said angular displacement of said control surface.

It is preferred for the seal member to comprise several plies, for example 3 to 5 or more, stacked together.

Preferably, at least one of said plies comprises a plurality of fabric elements butted against a neighbouring fabric element in the same ply without significant overlap.

To provide local stiffening, at least one of the plies may include a fabric element comprising a cloth strip element extending along the distal edge region of the flexible seal member, with the axis of maximum tensile strength of the strip element extending generally along the distal edge. Likewise, the same or another one of the plies may include cloth strip elements extending along each of the side edge regions with the axis of maximum tensile strength extending along the associated side edge region.

It is preferred for the plies together to define a specialised form of leaf spring which is capable of flexing through substantial angles but also capable of expansion and retraction along its distal border without significant buckling.

Thus one of said plies may comprises a main fabric element extending over at least a central portion of the seal member to confer flexural strength thereto. One of the other plies may comprise a buckle-reduction fabric element extending from the proximal edge of said seal member and of lesser extent of said main fabric element.

The inner surface of the seal member preferably comprises a layer of low friction sheet material in at least said distal edge region. The distal edge region preferably includes a bulbous lip or bead on its inner surface.

The rubber or rubber-like material preferably comprises a mouldable silicone rubber.

The seal member preferably includes a drain aperture for draining fluid or other material which may collect in use on the inner surface of said seal member.

According to another aspect of this invention, there is provided a method of producing a flexible seal member for a fairing arrangement according to the first aspect of the invention which comprises:
providing a tool having a mould surface conforming to the required shape of said flexible seal member,
placing on said mould surface a plurality of said reinforcing plies extending across at least a major portion of said mould surface, each ply comprising one or more fabric elements and selected to provided the formed seal member with required flexural and extension characteristics,
impregnating said fabric elements with a curable or rubber or rubber-like material, and
curing said rubber or rubber-like material to provide a composite fabric reinforced seal member.

The fabric elements are preferably pre-impregnated with said rubber or rubber-like material before placing on said mould surface. Such impregnation may be by any suitable method known to those skilled in the art, for example by calendering.

The invention may be performed in various ways and an embodiment thereof will now be described by way of example only, reference being made to the accompanying drawings, in which:-
Figure 1 is a cross-section through an aileron fairing showing the aft part of the wing, the forward part of the aileron, and the actuator jack;
Figure 2 is an underneath plan view of one of the ailerons;
Figure 3 is a detailed view of the principle aileron fairing parts;
Figure 4 is a plan view of an aileron seal;
Figure 5 is a section view taken on arrows V-V of Figure 4;
Figure 6 is a detailed view on region VI of Figure 5 showing the ply structure;
Figure 7 is a section view taken on arrows VII-VII of Figure 4.
Figures 8(a) to (e) show the fabric blanks used in each of the plies, in this example.

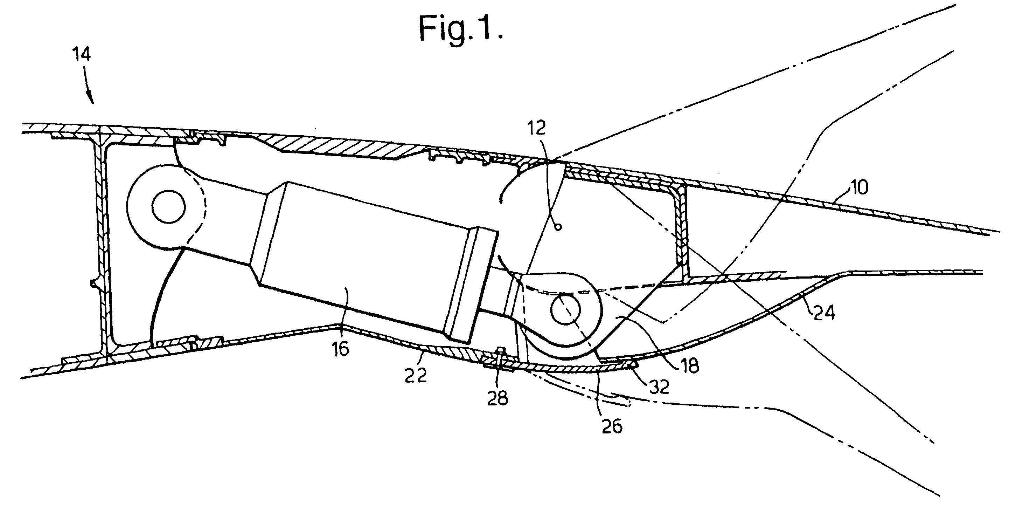

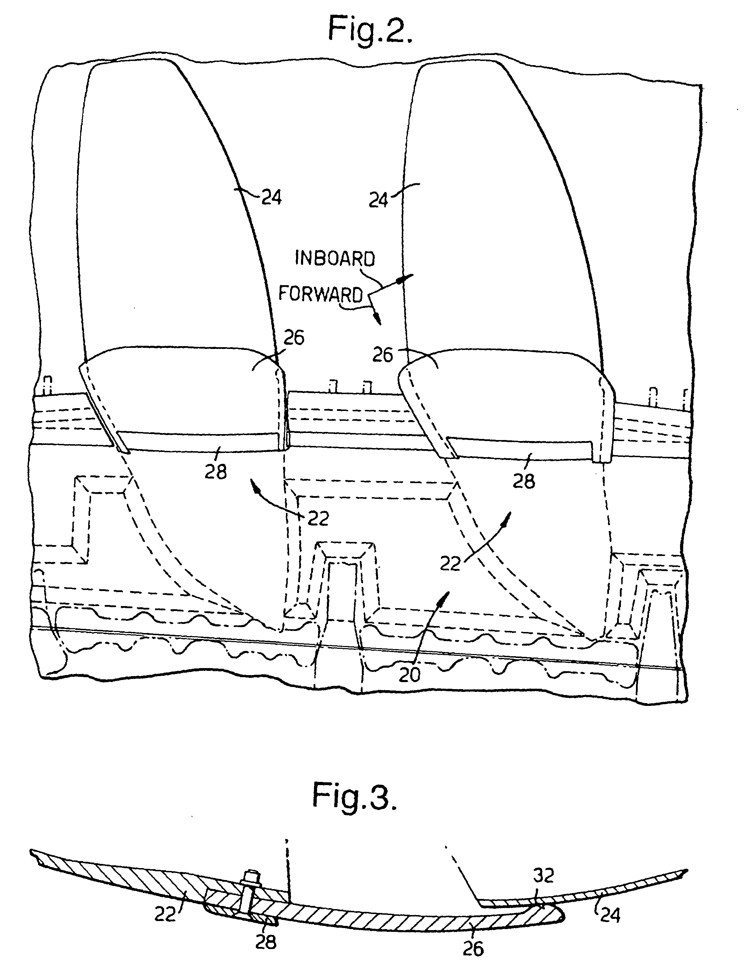

Referring initially to Figures 1 to 3, an aileron 10 is pivotally mounted at 12 to the main wing portion 14. An aileron actuator jack 16 is pivotally mounted at one end to a fixed structure of the main wing portion 14 and at its other end to a bracket 18 on the aileron 10. In this example, the actuator 16 is capable of deflecting the aileron 10 by +/- 30°. It will be seen that the actuator jack protrudes below the line of the main wing portion 14 and that the underwing panel 20 is formed to provide a fairing portion 22. Likewise, the aileron 10 is provided with a corresponding aileron fairing 24. In this invention, the main wing fairing 22 and the aileron fairing 24 are bridged by means of a conformable flexible rubber seal 26, attached to the aft part of the main wing fairing portion 22 by means of a clamp strap 28.

The seal 26 defines a continuous bridging surface between the main wing fairing and the aileron fairing for aileron movement in the range of -30° to +10°. Throughout this range of movement, the seal 26 remains substantially in contact with the aileron fairing 24 and flexes to accommodate the flexing movement caused by angular displacement of the aileron as well as the stretching or contraction required because of the translation of the aileron fairing 24 which occurs because the longitudinal axis of the aileron fairing is not perpendicular to the hinge axis of aileron.

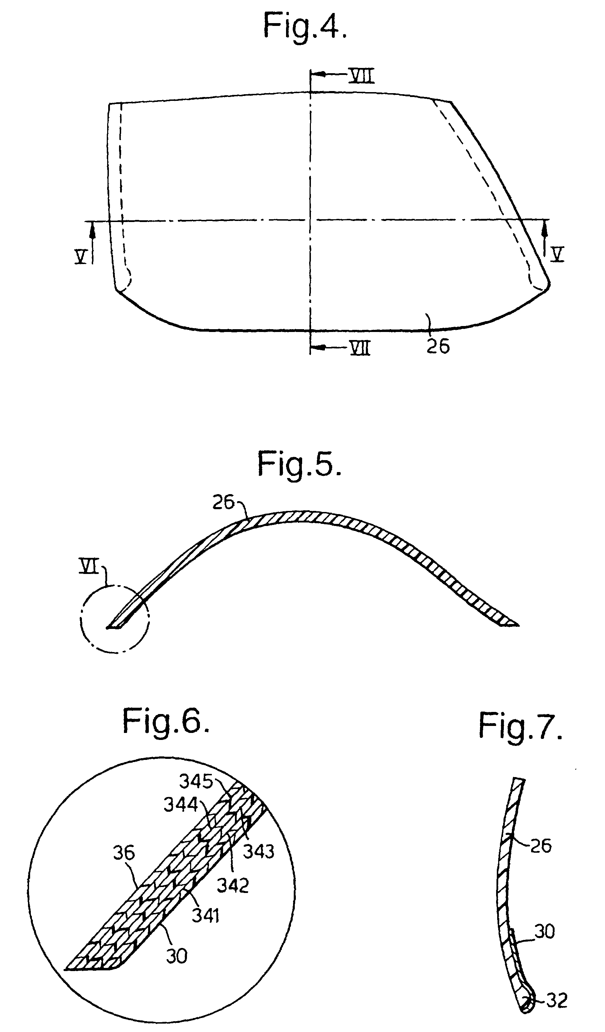

As can be seen from Figures 4 onwards, the flexible seal 26 is generally trapezoidal in plan and arcuate in section, but it should be appreciated that the shape of the seal will be selected according to the particular aileron and actuator position for which it is intended, as the shape of the main wing and aileron fairings 22, 24 are usually different for each actuator.

The flexible seal member 26 includes a layer of low-friction material 30 on its inner surface and is also formed with a bulbous lip 32 at its free or distal end. The lip 32 is designed to give a good sliding seal with the aileron fairing 24 as the aileron 10 is angularly displaced. The lip 32 also assists smooth re-engagement if the design of the aileron fairing 24 is such that it leaves contact with the seal 26 at the extreme upper deflections.

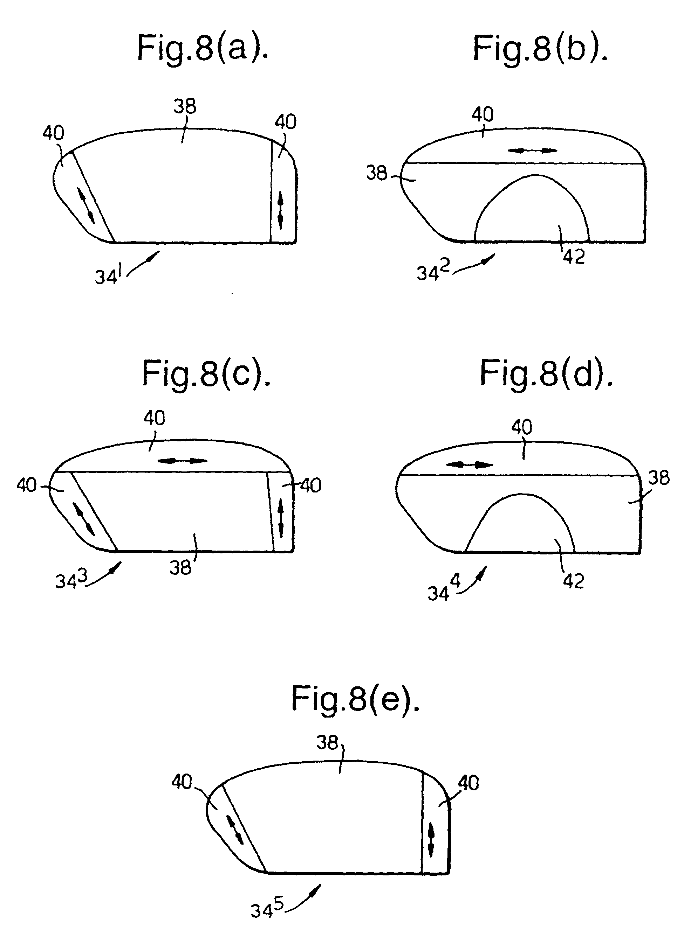

Referring now particularly to Figures 6 and 8, the seal 26 is of multi-ply construction, here made up of five plies 34¹ to 34⁵ together with an abrasion resistant outer layer 36, the plies being moulded integrally in a matrix of synthetic silicone rubber material.

Figure 8 shows a typical example of the plies used to make up one particular seal arrangement 26. It is emphasised that this particular layout is given by way of example only and many other variations are possible. Thus the innermost ply 34¹ is made up of central piece 38 of knitted polyester material for example that known as PRF90 available from Dunlop (RTM) Limited or Arvex (RTM) ET2633 available from Arville Textile Limited. A similar material is used in the other plies 34² to 34⁵ and in similarly referenced and these blanks serve to reinforce the seal. The first ply 34¹ also includes at its side regions two border strips 40 of plain woven glass fibre material such as PRF 56 available from Dunlop Limited or G502 available from Bestobell (RTM) Aviation. These strips 40 act as stiffeners for the edge region and again similar material is used to provide stiffening borders along the distal edge region and the side edge region in plies 34² to 34⁵. It should be noted that in each ply the strips are butted up against the adjacent element without overlapping. Finally, to provide a buckle-reduction effect, the second and fourth plies 34² and 34⁴ include a central generally semi-circular portion 42 of a knitted polyester material such as PRF89 available from Dunlop Limited or Baltex (RTM) 89001 available from W. Ball and Son. Again, in each ply, the central portions are butted up to the component 38 and do not overlap it. The portions 42 reduce the stiffness of the seal in this area thus spreading the effect of any buckling and making it less severe.

The silicone rubber material used in the seal is preferably a curable material such as Compound 12.109 available from Woodville Polymers Limited, Compound Number 587LG available from Dunlop Limited, or Compound Number GPB50 available from Specialised Elastomers Limited.

The seal 26 may be made by impregnating the various plies with the uncured silicone material, for example by calendering, and then cutting and laying up the various blanks as shown in Figure 8 on a tool. A vacuum bag can then be applied and the tool and bag placed in an autoclave for a primary cure at a temperature in the range of from 125°C to 150°C for a period of about an hour and at a pressure sufficient to consolidate the components. After the primary curing, the component may be removed from the mould tool and subjected to secondary or post-curing at a temperature of about 160°C for twelve hours or so. For full production purposes it is envisaged that matched tooling will be provided which should considerably reduce the process times.

## Claims

1. A fairing arrangement for bridging an aircraft fixed structure (14) and a control surface (10) hingedly mounted on and angularly displaceable with respect to said aircraft structure, said fairing arrangement including:
a first fairing portion (22) locatable on said fixed aircraft structure (14),
a second fairing portion (24) locatable on said control surface (10), and
an intermediate flexible seal member (26) disposed between said first and second fairing portions (22; 24) and having a proximal edge region fixed relative to one of said first and second fairing portions (22; 24) and a distal edge region, whereby the seal member (26) is deformable to accommodate differential movement between said first and second fairing portions (22, 24) when said control surface (10) is angularly displaced with respect to the fixed aircraft structure (14),
**characterised in that** said flexible seal member (26) comprises a composite sheet element of rubber or rubber-like material incorporating a plurality of reinforcing plies (34) across at least part of said sheet element, at least one said ply (34) extending across substantially the whole of the sheet element and each ply (34) comprising one or more fabric elements (38),
whereby said seal member (26) defines a surface which generally conforms to the adjacent portions of said first and second fairing portions (22; 24) throughout at least a major extent of the range of said angular displacement of said control surface (10).

2. A fairing arrangement according to Claim 1, wherein at least one of said plies (34) comprises a plurality of fabric elements (38, 42).

3. A fairing arrangement according to Claim 2, wherein each of said plurality of fabric elements (38; 42) is butted against a neighbouring fabric element in the same ply without significant overlap.

4. A fairing arrangement according to Claim 2 or Claim 3, wherein at least one of said plies (34) includes a fabric element comprising a cloth strip element (40) extending along the distal edge region of said flexible sheet element with the axis of maximum tensile strength of said strip element extending generally along the distal edge region.

5. A fairing arrangement according to any of Claims 2 to 4, wherein at least one of said plies (34) includes a fabric element comprising a cloth strip element (40) extending along each of the side edge regions of the flexible sheet element which extend between said proximal and distal edge regions, with the axis of maximum tensile strength of said cloth strip element extending generally along the associated side edge region.

6. A fairing arrangement according to any of the preceding Claims, wherein at least one of said plies (34) comprises a main fabric element (36) extending over at least a central portion of said flexible sheet element to confer flexural strength to said seal member.

7. A fairing arrangement according to Claim 6, wherein said one ply, or at least one of said other plies (34) comprises a buckle-reduction fabric element (42) extending from the proximal edge of said flexible sheet element and of lesser extent than said main fabric element (36) and arranged to prevent or reduce the possibility of the flexible sheet element buckling in that region in use.

8. A fairing arrangement according to any preceding Claim, wherein at least the distal region of the inner surface of the flexible sheet element comprises a layer (30) of low friction material.

9. A fairing arrangement according to any preceding Claim, wherein the distal edge of said flexible sheet element includes a bulbous lip or bead (32).

10. A method of producing a flexible seal member (26) for a fairing arrangement according to any preceding claim which comprises:
providing a tool having a mould surface conforming to the required shape of said flexible seal member (26);
placing on said mould surface a plurality of said reinforcing plies (34) extending across at least a major portion of said mould surface, each ply comprising one or more fabric elements (38, 42) and selected to provided the formed seal member (26) with required flexural and extension characteristics,
impregnating said fabric elements (38, 42) with a curable or rubber or rubber-like material, and
curing said rubber or rubber-like material to provide a composite fabric reinforced seal member (26).

11. A method according to Claim 10, wherein said fabric elements (38, 42) are impregnated with said rubber or rubber-like material before placing on said mould surface.

12. An aircraft wing (10, 14) including a fairing arrangement (22, 24, 26) according to any of Claims 1 to 9.

## Patentansprüche

1. Verkleidung zur Überbrückung zwischen einer festen Flugzeugstruktur (14) und einer Ruderfläche (10), die schwenkbar und im Winkel versetzbar gegenüber der Flugzeugstruktur angelenkt ist, wobei die Verkleidung folgende Teile aufweist:
einen ersten Verkleidungstell (22), der an der festen Flugzeugstruktur (14) positionierbar ist;
einen zweiten Verkleidungstell (24), der an der Ruderfläche (10) positionierbar ist, und
einen flexiblen dazwischen liegenden Dichtungskörper (26), der zwischen dem ersten und dem zweiten Verkleidungsteil (22, 24) angeordnet ist und einen proximalen relativ zu dem ersten Verkleidungstell (22) oder dem zweiten Verkleidungstell (24) festgelegten Randbereich und einen distalen Randbereich aufweist, wobei der Dichtungskörper (26) deformierbar ist, um sich einer differentiellen Bewegung zwischen dem ersten und zweiten Verkleidungstell (22, 24) anzupassen, wenn die Ruderfläche (10) im Winkel gegenüber der festen Flugzeugstruktur (14) verstellt wird,
**dadurch gekennzeichnet, dass** der flexible Dichtungskörper (26) ein Verbund-Schichtenelement aus Gummi oder gummiartigem Material aufweist, in dem mehrere Verstärkungsschichten (34) vorgesehen sind, die sich über wenigstens einen Teil des Schichtenelementes erstrecken, wobei wenigstens eine der Schichten (34) sich im Wesentlichen über die Gesamtheit das Schichtenelementes erstreckt und jede Schicht (34) ein Stoffelement (38) oder mehrere Stoffelemente aufweist, wobei der Dichtungskörper (26) eine Oberfläche definiert, die allgemein an die benachbarten Abschnitte von erstem und zweitem Verkleidungsteil (22, 24) wenigstens über den Hauptteil des Bereichs der Winkelversetzung der Ruderfläche (10) angepasst ist.

2. Verkleidung nach Anspruch 1, bei welcher wenigstens eine der Schichten (34) eine Mehrzahl von Gefügestrukturelementen (38, 42) aufweist.

3. Verkleidung nach Anspruch 2, bei welcher jedes der Mehrzahl von Gefügestrukturelementen (38, 42) stumpf gegen ein benachbartes Gefügestrukturelement in der gleichen Schicht gefügt ist, ohne dass eine wesentliche Überlappung stattfindet.

4. Verkleidung nach Anspruch 2 oder 3, bei welcher wenigstens eine der Schichten (34) ein Gefügestrukturelement aufweist, das aus einem Stoffstreifenelement (40) besteht, das sich längs des distalen Randbereichs des flexiblen Schichtenelementes erstreckt, wobei die Achse der maximalen Zugbeanspruchung des Strelfenelementes sich allgemein längs des distalen Randbereiches erstreckt.

5. Verkleidung nach den Ansprüchen 2 bis 4, bei welcher wenigstens eine der Schichten (34) ein Gefügestrukturelement aufweist, das ein Stoffstreifenelement (40) umfasst, welches sich längs eines jeden Seitenrandbereiches des flexiblen Blattelementes erstreckt, welches zwischen den proximalen und distalen Randbereichen verläuft, wobei die Achse der maximalen Zugbeanspruchung des Stoffstreifenelementes sich allgemein längs des zugeordneten Seitenrandbereiches erstreckt.

6. Verkleidung nach einem der vorhergehenden Ansprüche, bei welcher wenigstens eine der Schichten (34) ein Hauptgefüge-Strukturelement (36) aufweist, das sich über wenigstens einen zentralen Abschnitt des flexiblen Blattelementes erstreckt, um dem Dichtungskörper eine Biegefestigkeit zu verleihen.

7. Verkleidung nach Anspruch 6, bei welcher die eine Schicht oder wenigstens eine der anderen Schichten (34) aus einem eine Ausbeulung vermindernden Gefügestrukturelement (42) besteht, das sich vom proximalen Rand des flexiblen Schichtenalementes und im geringeren Maß als das Hauptgefüge-Strukturelement (36) erstreckt und angeordnet ist, um eine Ausbeulung des flexiblen Schichtenelementes in diesem Bereich im Betrieb zu verhindern oder zu verringern.

8. Verkleidung nach einem der vorhergehenden Ansprüche, bei welcher wenigstens der distale Bereich der inneren Oberfläche des flexiblen Schichtenelementes eine Schicht (30) aus einem Material mit geringer Reibung aufweist.

9. Verkleidung nach einem der vorhergehenden Ansprüche, bei welcher der distale Rand des flexiblen Blattelementes eine Wulstilppe oder eine Randwulst (32) aufweist.

10. Verfahren zur Herstellung eines flexiblen Dichtungskörpers (26) für eine Verkleidung nach einem der vorhergehenden Ansprüche mit den folgenden Schritten:
es wird ein Werkzeug mit einer Formoberfläche vorgesehen, die der erforderlichen Gestalt des flexiblen Dichtungskörpers (26) entspricht;
es werden auf der Formoberfläche mehrere Verstärkungsschichten (34) aufgelegt, die sich über wenigstens einen Hauptteil der Formoberfläche erstrecken, wobei jede Schicht eines oder mehrere Gefügestrukturelemente (38, 42) aufweist, die so ausgewählt sind, dass der geformte Dichtungskörper (26) die erforderliche Biegecharakteristik und Streckcharakteristik aufweist;
es werden die Gefügestrukturelemente (38, 42) mit einem Härter oder einem Gummi oder einem gummiartigen Material imprägniert, und
es wird der Gummi oder das gummiartige Material ausgehärtet, um einen durch die Gefügestruktur verstärkten Verbund-Dichtungskörper (26) zu schaffen.

11. Verfahren nach Anspruch 10, bei welchem die Gefügestrukturelemente (38, 42) mit dem Gummi oder dem gummiartigen Material imprägniert werden, bevor die Elemente auf der Formoberfläche angeordnet werden.

12. Flugzeugtragflügel (10, 14) mit einer Verkleidung (22, 24, 26) nach einem der Ansprüche 1 bis 9,

## Revendications

1. Un agencement de carénage destiné à faire le pont entre une structure fixe d'aéronef (14) et une surface de commande (10) montée de façon articulée sur ladite structure d'aéronef et déplaçable de façon angulaire par rapport à celle-ci, ledit agencement de carénage comprenant :
une première portion de carénage (22) pouvant être située sur ladite structure d'aéronef fixe (14),
une deuxième portion de carénage (24) pouvant être située sur ladite surface de commande (10), et
une unité formant joint d'étanchéité flexible intermédiaire (26) disposée entre lesdites première et deuxième portions de carénage (22 ; 24) et ayant une région de bord proximal fixée relativement à l'une desdites première et deuxième portions de carénage (22 ; 24) et une région de bord distal, grâce à quoi l'unité formant joint d'étanchéité (26) est déformable pour accueillir le déplacement différentiel entre lesdites première et deuxième portions de carénage (22, 24) lorsque ladite surface de commande (10) est déplacée de façon angulaire par rapport à la structure d'aéronef fixe (14),
**caractérisé en ce que** ladite unité formant joint d'étanchéité flexible (26) comporte un élément en feuille composite de matériau en caoutchouc ou semblable à du caoutchouc incorporant une pluralité de plis de renfort (34) sur au moins toute une partie dudit élément en feuille, au moins un dit pli (34) s'étendant sur substantiellement la totalité de l'élément en feuille et chaque pli (34) comportant un ou plusieurs éléments en toile (38). Grâce à quoi ladite unité formant joint d'étanchéité (26) définit une surface qui épouse généralement les portions adjacentes desdites première et deuxième portions de carénage (22 ; 24) à travers au moins toute une étendue importante de la gamme dudit déplacement angulaire de ladite surface de commande (10).

2. Un agencement de carénage selon la revendication 1, dans lequel au moins l'un desdits plis (34) comporte une pluralité d'éléments en toile (38, 42).

3. Un agencement de carénage selon la revendication 2, dans lequel chaque élément de ladite pluralité d'éléments en toile (38 ; 42) est abouté contre un élément en toile voisin dans le même pli sans chevauchement notable.

4. Un agencement de carénage selon la revendication 2 ou la revendication 3, dans lequel au moins l'un desdits plis (34) comprend un élément en toile comportant un élément en bande de tissu (40) s'étendant le long de la région de bord distal dudit élément en feuille flexible, l'axe de résistance à la traction maximale dudit élément en bande s'étendant généralement le long de la région de bord distal.

5. Un agencement de carénage selon n'importe lesquelles des revendications 2 à 4, dans lequel au moins l'un desdits plis (34) comprend un élément en toile comportant un élément en bande de tissu (40) s'étendant le long de chacune des régions de bord latéral de l'élément en feuille flexible qui s'étendent entre lesdites régions de bord proximal et distal, l'axe de résistance à la traction maximale dudit élément en bande de tissu s'étendant généralement le long de la région de bord latéral associée.

6. Un agencement de carénage selon n'importe lesquelles des revendications précédentes, dans lequel au moins l'un desdits plis (34) comporte un élément en toile principal (36) s'étendant pardessus au moins une portion centrale dudit élément en feuille flexible pour conférer une résistance à la flexion à ladite unité formant joint d'étanchéité.

7. Un agencement de carénage selon la revendication 6, dans lequel cedit pli, ou au moins l'un desdits autres plis (34), comporte un élément en toile de réduction de gondolage (42) s'étendant depuis le bord proximal dudit élément en feuille flexible et d'étendue moindre que ledit élément en toile principal (36) et étant agencé pour empêcher ou réduire la possibilité que l'élément en feuille flexible se gondole dans cette région lors de l'utilisation.

8. Un agencement de carénage selon n'importe quelle revendication précédente, dans lequel au moins la région distale de la surface interne de l'élément en feuille flexible comporte une couche (30) de matériau à coefficient de frottement réduit.

9. Un agencement de carénage selon n'importe quelle revendication précédente, dans lequel le bord distal dudit élément en feuille flexible comprend une lèvre ou un bourrelet renflé (32).

10. Un procédé de production d'une unité formant joint d'étanchéité flexible (26) destinée à un agencement de carénage selon n'importe quelle revendication précédente, lequel comporte :
fournir un outil ayant une surface de moule épousant la configuration requise de ladite unité formant joint d'étanchéité flexible (26),
placer sur ladite surface de moule une pluralité desdits plis de renfort (34) s'étendant sur au moins toute une portion importante de ladite surface de moule, chaque pli comportant un ou plusieurs éléments en toile (38, 42) et étant sélectionné pour apporter les caractéristiques de flexion et d'extension requises à l'unité formant joint d'étanchéité (26) formée,
imprégner lesdits éléments en toile (38, 42) d'un matériau durcissable ou en caoutchouc ou semblable à du caoutchouc, et
durcir ledit matériau en caoutchouc ou semblable à du caoutchouc pour fournir une unité composite formant joint d'étanchéité renforcée en toile (26).

11. Un procédé selon la revendication 10, dans lequel lesdits éléments en toile (38, 42) sont imprégnés dudit matériau en caoutchouc ou semblable à du caoutchouc avant d'être placés sur ladite surface de moule.

12. Une aile d'aéronef (10, 14) comprenant un agencement de carénage (22, 24, 26) selon n'importe lesquelles des revendications 1 à 9.
